# EUROPÄISCHE PATENTSCHRIFT

(11) **EP 1 331 116 B1**
(45) Veröffentlichungstag und Bekanntmachung des Hinweises auf die Patenterteilung: **14.06.2006**
(21) Anmeldenummer: 03000826.2
(22) Anmeldetag: 15.01.2003
(51) Int. Cl.: B60H 1/34

(54) **Luftdüse**
Air nozzle
Buse à air

(30) Priorität: 25.01.2002 DE 10202926
(43) Veröffentlichungstag der Anmeldung: 30.07.2003
(73) Patentinhaber: ADAM OPEL AG, 65423 Rüsselsheim (DE)
(72) Erfinder: Finkbeiner, Beat, 65191 Wiesbaden (DE)

(56) Entgegenhaltungen:
- EP-A- 0 397 909
- EP-A- 1 084 877
- DE-A- 10 029 365
- US-A- 5 238 448

## Beschreibung

Die Erfindung betrifft eine Luftdüse zur Belüftung eines Innenraums eines Kraftfahrzeuges mit zumindest einem in einem Düsengehäuse angeordneten Leitelement zur Lenkung von aus einer Öffnung im Düsengehäuse austretender Luft und mit einer Verstelleinrichtung zur Verstellung des Leitelementes, wobei das Düsengehäuse zumindest nahe der Öffnung zur Erzeugung der feststehenden Wandelemente in vorgesehenen Ausströmrichtungen bogenförmig zur Ebene der Öffnung gestaltet ist und das Leitelement zur Drosselung und/oder Lenkung der Strömung an den Wandelementen gestaltet ist.

Aus der EP 0 397 909 B1ist eine Luftdüse bekannt, bei der als Lamellen ausgebildete Leitelemente um eine quer zur Strömungsrichtung weisende Schwenkachse schwenkbar gelagert und mit einem Stellelement der Verstelleinrichtung verbunden sind. Bei der vertikalen Anordnung der Schwenkachse ermöglichen die Lamellen eine Führung des aus der Luftdüse austretenden Luftstroms in einer horizontalen Ebene. Nachteilig bei dieser Luftdüse ist, dass die Lamellen für ihre Schwenkbarkeit im Bereich der Öffnung einen großen Platzbedarf haben. Ein großer Raum für die Öffnung ist jedoch insbesondere bei in einer Armaturentafel eines Kraftfahrzeuges angeordneten Luftdüsen häufig nicht vorhanden.

Die den nächstliegenden Stand der Technik bildende DE 100 29 365 A1 offenbart eine Luftdüse zur Belüftung eines Innenraums eines Kraftfahrzeuges mit zumindest einem in einem Düsengehäuse angeordneten Leitelement zur Lenkung von aus einer Öffnung im Düsengehäuse austretender Luft und mit einer Verstelleinrichtung zur Verstellung des Leitelementes. Mit dem Düsengehäuse sind feststehende Wandelemente in vorgesehenen Ausströmrichtungen bogenförmig zur Ebene der Öffnung ausgerichtet und das Leitelement ist zur Drosselung und/ oder Lenkung der Strömung an den Wandelementen gestaltet. Bei dieser Luftdüse weist das Leitelement eine zu dem Düsengehäuse rotationssymmetrische Geometrie auf und ist innerhalb des bogenförmigen Bereichs der feststehenden Wandelemente angeordnet, die im Wesentlichen einen Zylinder bilden, wobei das Leitelement in seinem Inneren schwenkbar gelagerte Luftleitplatten aufweist und um seine Längsachse drehbar in den Düsengehäuse gelagert ist. Zur Verdrehung des Leitelementes ist ein außerhalb des Düsengehäuses angeordnetes Bedienrad als Bestandteil der Verstelleinrichtung vorgesehen.

Der Erfindung liegt das Problem zugrunde, eine Luftdüse der eingangs genannten Art so zu gestalten, dass sie einen besonders geringen Platzbedarf hat.

Dieses Problem wird erfindungsgemäß dadurch gelöst, dass das Leitelement um eine parallel zur Öffnung angeordnete Achse schwenkbar gelagert und in Strömungsrichtung gesehen vor dem bogenförmigen Bereich angeordnet ist, wobei ein mit dem Leitelement gekoppeltes Stellelement bis zu der Öffnung geführt ist.

Durch diese Gestaltung lässt sich der Bereich der Öffnung besonders klein halten, da die Ausströmrichtung im Wesentlichen von den mit dem Düsengehäuse feststehenden und damit nicht schwenkbaren Wandelementen festgelegt wird. Die Leitelemente lenken die Strömung der Luft wahlweise auf die in der einen Richtung ausgerichteten Wandelemente oder auf die in der anderen Richtung ausgerichteten Wandelemente und können deshalb im inneren Bereich des Düsengehäuses angeordnet sein. Ein weiterer Vorteil dieser Gestaltung besteht darin, dass sich die Kontur der Öffnung des Düsengehäuses der vorgesehenen Kontur einer an die erfindungsgemäße Luftdüse angrenzenden Armaturentafel des Kraftfahrzeuges anpassen lässt. Der an die Öffnung angrenzende Bereich der bogenförmigen Wandelemente des Düsengehäuses kann wahlweise kugel- oder zylinderförmig gestaltet sein. Deshalb lässt sich die Ausströmrichtung bei Einsatz eines geeigneten Leitelementes in der horizontalen Ebene und der vertikalen Ebene einstellen. Die Einstellung des Leitelementes gestaltet sich besonders komfortabel, wenn das Leitelement in Strömungsrichtung gesehen vor dem bogenförmigen Bereich angeordnet und ein mit dem Leitelement gekoppeltes Stellelement bis zu der Öffnung geführt ist. Durch diese Gestaltung lässt sich die Strömung der Luft gezielt auf eines der Wandelemente lenken und von diesem auslenken. Das andere der Wandelemente trägt daher nicht zur Lenkung der Luft bei. Weiterhin erfordert die Verstelleinrichtung hierdurch einen besonders geringen baulichen Aufwand.

Die Wandelemente können beispielweise als feststehende Lamellen gestaltet sein. Die erfindungsgemäße Luftdüse erfordert jedoch besonders wenige zu montierende Bauteile, wenn die Wandelemente als Seitenwandungen des Düsengehäuses ausgebildet sind.

Die Verstellung der Ausströmrichtung in der horizontalen Ebene und der vertikalen Ebene erfordert gemäß einer vorteilhaften Weiterbildung der Erfindung einen besonders geringen Aufwand, wenn das Leitelement um eine senkrecht zur Öffnung weisende Achse drehbar gelagert ist.

Die Drosselung der Strömung der Luft an einem der Wandelemente erfordert gemäß einer Ausgestalttung der Erfindung einen besonders geringen Aufwand, wenn das Leitelement wahlweise gegen das eine Wandelement oder gegen das andere Wandelement schwenkbar gelagert ist.

Die Erfindung lässt verschiedene Ausführungsformen zu. Zur weiteren Verdeutlichung ihres Grundprinzips sind zwei davon in der Zeichnung dargestellt und werden nachfolgend beschrieben. Die Zeichnung zeigt in
- Fig. 1: eine perspektivische Darstellung einer erfindungsgemäßen Luftdüse,
- Fig. 2: eine Schnittdarstellung durch die Luftdüse aus Figur 1 entlang der Linie II - II,
- Fig. 3: die Luftdüse aus Figur 2 nach einer Verstellung eines Leitelementes,
- Fig. 4: eine Schnittdarstellung durch eine weitere Ausführungsform der erfindungsgemäßen Luftdüse.

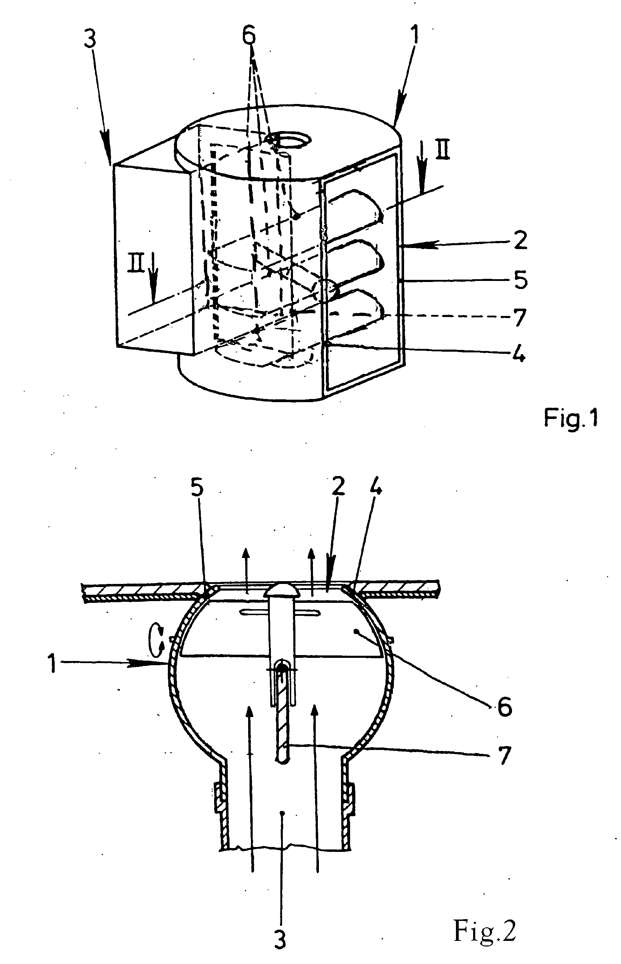

Figur 1 zeigt eine Luftdüse mit einem zylindrischen Düsengehäuse 1. Das Düsengehäuse 1 hat eine Öffnung 2 zum Ausströmen der Luft und einen Kanal 3, über den die Luft in das Düsengehäuse 1 eingeführt wird. An die Öffnung 2 grenzen Wandelemente 4, 5 des Düsengehäuses 1 an. Innerhalb des Düsengehäuses 1 sind mehrere schwenkbare Lamellen 6 und ein ebenfalls schwenkbares Leitelement 7 angeordnet. Die Lamellen 6 dienen zur Einstellung der Ausströmrichtung beispielsweise in der vertikalen Ebene der Luftdüse, während sich über das Leitelement 7 die Ausströmrichtung beispielsweise in der horizontalen Ebene einstellen lässt.

Figur 2 zeigt in einer Schnittdarstellung durch die Luftdüse aus Figur 1 entlang der Linie II - II, dass die Wandelemente 4, 5 schräg zur Ebene der Öffnung 2 ausgerichtet sind. Das Leitelement 7 ist um eine senkrecht zur Zeichenebene weisende Achse schwenkbar gelagert und ist in einem Bereich zwischen den Wandelementen 4, 5 ausgerichtet. Hierdurch gelangt die Strömung auf geradem Wege durch das Düsengehäuse 1. Zur Verdeutlichung sind in der Zeichnung die Strömungen der Luft mit Doppelpfeilen gekennzeichnet.

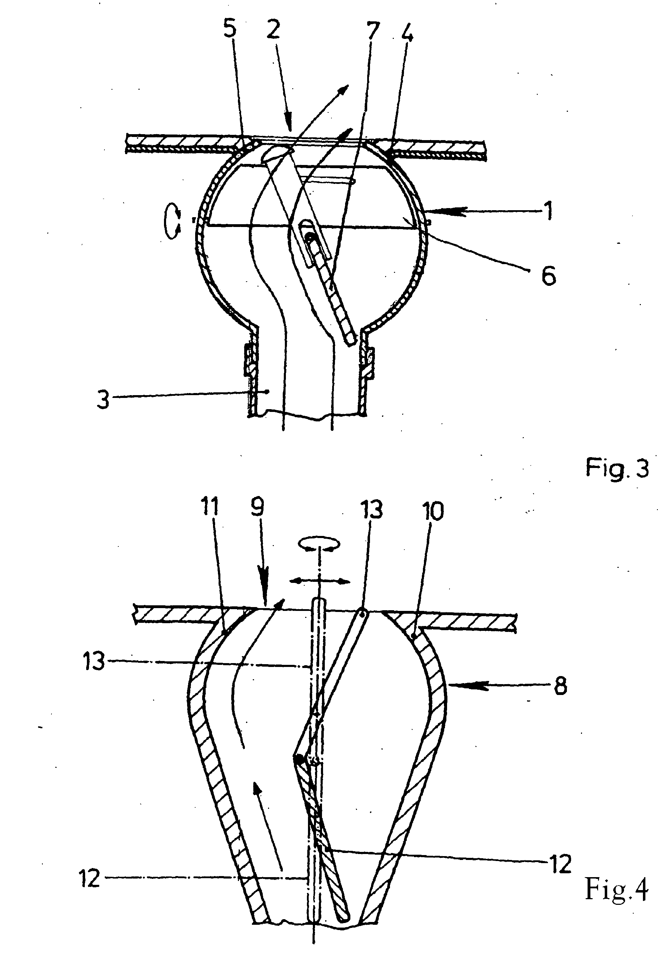

Figur 3 zeigt die Luftdüse aus Figur 2 nach einer Verschwenkung des Leitelementes 7. Hierdurch wird die Strömung der Luft auf eines der gewölbten Wandelemente 5 gerichtet, so dass die Luft von diesem Wandelement 5 gelenkt wird. An dem gegenüberliegenden Wandelement 4 wird die Strömung der Luft gedrosselt. Damit ist die Ausströmrichtung der Luft aus der Öffnung 2 abhängig von der Stellung des Leitelementes 7. Das Wandelement 5, an welchem die Luft entlanggeführt wird, legt die Ausströmrichtung der Luft aus der Öffnung 2 fest.

Figur 4 zeigt eine weitere Ausführungsform der Luftdüse im Längsschnitt, bei dem ein Düsengehäuse 8 nahe einer Öffnung 9 zu einer Halbkugel zusammengesetzte Wandelemente 10, 11 hat. Innerhalb des Düsengehäuses 8 ist ein Leitelement 12 schwenkbar gelagert. Das Leitelement 12 ist mit einem ebenfalls schwenkbar gelagerten Stellelement 13 gekoppelt. Das Stellelement 13 ragt geringfügig aus der Öffnung 9 des Düsengehäuses 8 heraus und lässt sich um eine senkrecht zur Zeichenebene weisende Achse verschwenken und um eine senkrecht zur Öffnung 9 weisende Achse drehen. Hierdurch wird das Leitelement 12 mitgeschwenkt oder mitgedreht und lenkt die Luft auf die Wandelemente 10, 11 nahe der Öffnung 9. In der dargestellten geschwenkten Stellung des Leitelementes 12 wird die Luft auf eines der Wandelemente 11 gelenkt und tritt in einer von dem Wandelement 11 festgelegten Ausströmrichtung aus der Öffnung 9 aus. Strichpunktiert ist in Figur 4 eine gerade Stellung des Stellelementes 13 und damit auch des Leitelementes 12 dargestellt, bei der die Luft ohne Auslenkung durch die Wandelemente 11, 12 gerade aus der Öffnung 9 austritt. Die Verschwenkbarkeit des Leitelementes 12 um die senkrecht zur Zeichenebene weisende Achse und die Drehbarkeit des Leitelementes 12 um die senkrecht zur Öffnung weisende Achse mittels des einzigen Stellelementes 13 ermöglicht eine besonders komfortable Bedienung dieser Ausführungsform der Luftdüse.

### Bezugszeichenliste

- 1: Düsengehäuse
- 2: Öffnung
- 3: Kanal
- 4, 5: Wandelement
- 6: Lamelle
- 7: Leitelement
- 8: Düsengehäuse
- 9: Öffnung
- 10, 11: Wandelement
- 12: Leitelement
- 13: Stellelement

## Patentansprüche

1. Luftdüse zur Belüftung eines Innenraums eines Kraftfahrzeuges mit zumindest einem in einem Düsengehäuse angeordneten Leitelement zur Lenkung von aus einer Öffnung im Düsengehäuse austretender Luft und mit einer Verstelleinrichtung zur Verstellung des Leitelementes, wobei das Düsengehäuse (1, 8) zumindest nahe der Öffnung (2, 9) zur Erzeugung der feststehenden Wandelemente in vorgesehenen Ausströmrichtungen bogenförmig zur Ebene der Öffnung (2, 9) gestaltet ist und das Leitelement (7, 12) zur Drosselung und/oder Lenkung der Strömung an den Wandelementen (4, 5, 10, 11) gestaltet ist, wobei das Leitelement (12) um eine parallel zur Öffnung (9) angeordnete Achse schwenkbar gelagert ist, **dadurch gekennzeichnet, dass** das Leitelement (12) in Strömungsrichtung gesehen vor dem bogenförmigen Bereich angeordnet ist, wobei ein mit dem Leitelement (12) gekoppeltes Stellelement (13) bis zu der Öffnung (9) geführt ist.

2. Luftdüse nach Anspruch 1, **dadurch gekennzeichnet, dass** die Wandelemente (4, 5, 10, 11) als Seitenwandungen des Düsengehäuses (1, 8) ausgebildet sind.

3. Luftdüse nach Anspruch 1, **dadurch gekennzeichnet, dass** das Leitelement (12) um eine senkrecht zur Öffnung (9) weisende Achse drehbar gelagert ist.

4. Luftdüse nach Anspruch 1, **dadurch gekennzeichnet, dass** das Leitelement wahlweise gegen das eine Wandelement oder gegen das andere Wandelement schwenkbar gelagert ist.

## Claims

1. Air nozzle for ventilating an interior of a motor vehicle, comprising at least one baffle element disposed in a nozzle housing for guiding air exiting from an opening in the nozzle housing and comprising an adjustment device for adjusting the baffle element, wherein the nozzle housing (1, 8) at least close to the opening (2, 9) to produce the fixed wall elements in intended outflow directions is fashioned in the shape of an arc relative to the plane of the opening (2, 9) and the baffle element (7, 12) is designed to restrict and/or direct the flow at the wall elements (4, 5, 10, 11), wherein the baffle element (12) is mounted pivotably about an axis disposed parallel to the opening (9), **characterized in that** the baffle element (12) is disposed, viewed in flow direction, upstream of the arc-shaped region, wherein a positioning element (13) coupled to the baffle element (12) extends as far as the opening (9).

2. Air nozzle according to claim 1, **characterized in that** the wall elements (4, 5, 10, 11) take the form of side walls of the nozzle housing (1, 8).

3. Air nozzle according to claim 1, **characterized in that** the baffle element (12) is mounted rotatably about an axis directed at right angles to the opening (9).

4. Air nozzle according to claim 1, **characterized in that** the baffle element is mounted pivotably, selectively, either towards the one wall element or towards the other wall element.

## Revendications

1. Buse à air pour la ventilation de l'habitacle d'un véhicule automobile avec au moins un élément de guidage disposé dans un boîtier de buse pour diriger l'air sortant d'une ouverture dans le boîtier de buse et avec un dispositif de réglage pour le réglage de l'élément de guidage, dans lequel le boîtier de buse (1, 8) a une forme d'arc par rapport au plan de l'ouverture (2, 9) au moins à proximité de l'ouverture (2, 9) pour former les éléments de parois fixes dans des directions d'écoulement prévues et l'élément de guidage (7, 12) est conçu pour étrangler et/ou diriger l'écoulement au niveau des éléments de parois (4, 5, 10, 11), dans lequel l'élément de guidage (12) est logé pour pouvoir pivoter autour d'un axe agencé parallèlement à l'ouverture (9), **caractérisé en ce que** l'élément de guidage (12), vu dans la direction d'écoulement, est disposé devant la zone en forme d'arc, un élément de réglage (13) couplé avec l'élément de guidage (12) étant amené jusqu'à l'ouverture (9).

2. Buse à air selon la revendication 1, **caractérisé en ce que** les éléments de parois (4, 5, 10, 11) sont configurés comme des parois latérales du boîtier de buse (1, 8).

3. Buse à air selon la revendication 1, **caractérisé en ce que** l'élément de guidage (12) est logé pour pouvoir pivoter autour d'un axe orienté perpendiculairement à l'ouverture (9).

4. Buse à air selon la revendication 1, **caractérisé en ce que** l'élément de guidage est logé pour pouvoir pivoter, au choix, contre un élément de paroi ou contre l'autre élément de paroi.
